# EUROPEAN PATENT APPLICATION

(11) **EP 4 787 537 A1**
(43) Date of publication of application: **05.08.2026**
(21) Application number: 25867211.2
(22) Date of filing: 14.07.2025
(51) Int. Cl.: H01M 10/48, H01M 50/50, G01K 7/22

(54) **TEMPERATURE MEASUREMENT DEVICE AND BATTERY MODULE**

(30) Priority: 03.12.2024 KR 20240177119
(71) Applicant: LG ENERGY SOLUTION, LTD., Seoul 07335 (KR)
(72) Inventor: HONG, Min Seok, Yuseong-gu Daejeon 34122 (KR)
(74) Representative: BCKIP Part mbB
(86) International application number: PCT/KR2025/010272
(87) International publication number: WO 2026/121450

(57) **Abstract**

The present disclosure relates to an apparatus for manufacturing a pouch for a secondary battery for manufacturing a pouch for a secondary battery including a pouch body and a sealing portion, and the apparatus for manufacturing a pouch for a secondary battery may include a pressure portion provided to selectively press the sealing portion of the pouch for a secondary battery along a vertical direction so that the sealing portion is bent toward the vertical direction orthogonal to the horizontal direction, and selectively press the sealing portion along the horizontal direction so that the bent sealing portion moves in a direction approaching the pouch body; and an adhesive tape supply unit that supplies an adhesive tape to a target adhesive surface of the sealing portion facing the side surface of the pouch body, wherein the adhesive tape may be adhered between the target adhesive surface and the side surface of the pouch body as the sealing portion is pressed in the horizontal direction by the pressure portion, thereby obtaining the advantageous effects of simplifying the structure and provision process, and improving space utilization and design freedom.

## Description

### TECHNICAL FIELD

### CROSS-REFERENCE TO RELATED APPLICATIONS

The present application is based on and claims priority from Korean Patent Application No. 10-2024-0177119, filed on December 3, 2024, with the Korean Intellectual Property Office, the disclosure of which is incorporated herein in its entirety by reference.

### TECHNICAL FIELD

The present disclosure relates to an apparatus for detecting temperature and a battery module, and more specifically, to an apparatus for detecting temperature and a battery module that may improve stability and reliability.

### BACKGROUND ART

Recently, research and development on secondary batteries have been actively conducted. Here, secondary batteries refer to rechargeable batteries, and include both conventional Ni/Cd and Ni/MH batteries, and recent lithium-ion batteries.

Among secondary batteries, lithium-ion batteries offer the advantage of having significantly higher energy density compared to conventional Ni/Cd and Ni/MH batteries. Additionally, lithium-ion batteries may be manufactured to be compact and lightweight, so that they are used as power sources for mobile devices, and recently, their application scope has expanded to power sources for electric vehicles, thereby drawing attention as a next-generation energy storage medium.

Meanwhile, recently, as the need for large-capacity structures including their use as energy storage sources is growing, the demand for a battery pack in which a plurality of secondary batteries or battery modules are assembled has been increasing.

The battery module may include a plurality of battery cells electrically connected and a module case provided to surround the perimeter of the battery cells.

Meanwhile, if the temperature of the battery cell constituting the battery module exceeds the normal operating temperature range, for example, if the temperature of the battery cell abnormally rises due to overvoltage or overcurrent, the performance and life of the battery cell deteriorate, and the risk of fire (ignition) increases, so that it is essential to accurately detect temperature changes in the battery cell in real time.

Thus, conventionally, a method of sensing the temperature of the battery cell by pressing a thermistor (temperature sensor) by the weight of a horizontal contact rotatably provided based on a vertical contact fastened to the battery module to be brought into contact with the battery cell, has been proposed.

However, conventionally, if the horizontal contact fails to apply normal pressure to the thermistor due to design errors, vibrations, and the like (if the weight by the horizontal contact is not sufficiently applied to the thermistor), there is a problem that the thermistor may become spaced apart (non-contacted) from the battery cell, resulting in a sensing failure.

Accordingly, various studies have recently been conducted to accurately monitor temperature changes in battery modules without being affected by design errors, vibrations, and the like, but these are still insufficient, and further development thereof is required.

### DISCLOSURE

### TECHNICAL PROBLEM

The embodiment of the present disclosure is directed to providing an apparatus for detecting temperature and a battery module that may improve stability and reliability.

In particular, the embodiment of the present disclosure is directed to enabling accurate monitoring of temperature changes in the battery module without being affected by design errors, vibrations, and the like.

Above all, the embodiment of the present disclosure is directed to suppressing the phenomenon in which a temperature sensor is spaced apart from a battery cell due to design errors, vibrations, and the like, and to stably maintaining contact state between the temperature sensor and the battery cell.

Additionally, the embodiment of the present disclosure is directed to enabling accurate measurement and management of the temperature of the battery module.

The problem to be solved in the embodiment is not limited thereto, and it can be said that the purpose or effect that may be identified from the method of solution or embodiment of the problem described below is also included.

### TECHNICAL SOLUTION

According to a preferred embodiment of the present disclosure for achieving the objects of the present disclosure described above, an apparatus for detecting temperature for a battery module including a battery cell and a module case provided to surround the perimeter of the battery cell includes a temperature sensor that is provided between the battery cell and the module case to be in contact with the battery cell and senses the temperature of the battery cell; a support member that presses the temperature sensor against the battery cell; and an elastic force applying unit that applies elastic force to the support member to move the support member in a direction of pressing the temperature sensor against the battery cell.

This is to accurately monitor temperature changes in the battery module and improve stability and reliability.

That is, conventionally, if the horizontal contact fails to apply normal pressure to the thermistor due to design errors, vibrations, and the like (if the weight by the horizontal contact is not sufficiently applied to the thermistor), there is a problem that the thermistor may become spaced apart (non-contacted) from the battery cell, resulting in a sensing failure.

However, by allowing the support member that presses the temperature sensor against the battery cell by its own weight to be elastically supported by the elastic force of the elastic force applying unit, the embodiment of the present disclosure may obtain the advantageous effect of minimizing the phenomenon in which the temperature sensor is spaced apart from the battery cell due to design errors, vibrations, and the like.

In particular, by applying both the pressing force due to the weight of the support member and the pressing force due to the elastic force of the elastic force applying unit to the temperature sensor together, the embodiment of the present disclosure may obtain the advantageous effect of minimizing sensing failure phenomenon caused by the temperature sensor being spaced apart from the battery cell due to design errors, vibrations, and the like, and stably maintaining the contact state between the temperature sensor and the battery cell. Therefore, it is possible to obtain the advantageous effect of minimizing the temperature sensing failure phenomenon of the temperature sensor and accurately and stably detecting the temperature changes in the battery cell.

According to a preferred embodiment of the present disclosure, the battery module may include a busbar frame connected to the battery cell, and the support member may be supported by the busbar frame.

In this way, by allowing the support member to be supported by a busbar frame provided to electrically connect each battery cell, the embodiment of the present disclosure may obtain the advantageous effect of simplifying the structure and improving design freedom and space utilization as it is not required to provide a separate structure for supporting the support member.

The support member may be provided in various structures capable of pressing the temperature sensor against the battery cell by its own weight.

According to a preferred embodiment of the present disclosure, the support member may include a first support portion supported by the battery cell; and a second support portion that is rotatably connected to the first support portion and presses the temperature sensor against the battery cell by its own weight, and the elastic force applying unit may apply elastic force to the second support portion to move the second support portion in a direction of pressing the battery cell.

According to a preferred embodiment of the present disclosure, the first support portion may be disposed along the vertical direction, and the second support portion may be rotatably connected to the upper end of the first support portion.

The elastic force applying unit may be provided in various structures capable of applying elastic force to the support member.

According to a preferred embodiment of the present disclosure, the elastic force applying unit may include a first support plate supported by the support member; a second support plate supported by the module case to be spaced apart from the first support plate; and an elastic connection portion that has one end connected to the first support plate and the other end connected to the second support plate and supports the second support plate to elastically move the second support plate relative to the first support plate.

The elastic connection portion may be provided in various structures capable of supporting the second plate to elastically move the second plate relative to the first plate.

Here, when the second plate elastically moves relative to the first plate, it is defined to include both cases where only one of the first plate and the second plate moves relative to the other, and where both the first plate and the second plates move.

According to a preferred embodiment of the present disclosure, the elastic connection portion may include a first connection portion having one end connected to the first plate and the other end connected to the second plate; and a second connection portion that is provided to be spaced apart from the first connection portion and has one end connected to the first plate and the other end connected to the second plate.

According to a preferred embodiment of the present disclosure, the first connection portion and the second connection portion may be provided to face each other.

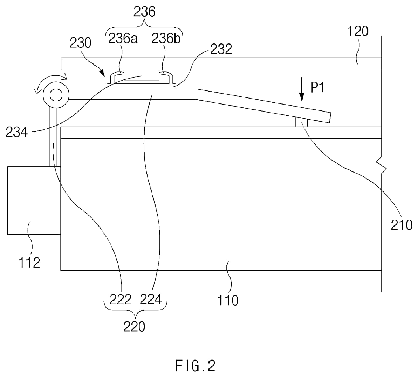

In this way, by elastically supporting the second plate relative to the first plate via the first connection portion and the second connection portion that are provided to face each other, the embodiment of the present disclosure may elastically support the second plate relative to the first plate, not only against errors and vibrations along the upper-lower direction of the battery cell (the upper-lower direction based on FIG. 2), but also against errors and vibrations along other directions inclined with respect to the upper-lower direction of the battery cell.

According to a preferred embodiment of the present disclosure, the battery module may include a cable member interposed between the support member and the temperature sensor and electrically connected to the temperature sensor.

In this way, by providing a cable member between the support member and the temperature sensor, and indirectly applying the pressing force to the temperature sensor via the cable member by the support member, the embodiment of the present disclosure may obtain the advantageous effect of minimizing deformation of and damage to the temperature sensor due to direct contact (pressing) of the support member with the temperature sensor and extending the life of the temperature sensor.

According to another preferred aspect of the present disclosure, the battery module includes a battery cell; a module case provided to surround the perimeter of the battery cell; a temperature sensor that is provided between the battery cell and the module case to be in contact with the battery cell and senses the temperature of the battery cell; a support member supported by the battery cell and pressing the temperature sensor against the battery cell by its own weight; and an elastic force applying unit that applies elastic force to the support member to move the support member in a direction of pressing the temperature sensor against the battery cell.

According to another preferred aspect of the present disclosure, the support member may include a first support portion supported by the battery cell; and a second support portion that is rotatably connected to the first support portion and presses the temperature sensor against the battery cell by its own weight, and the elastic force applying unit may apply elastic force to the second support portion to move the second support portion in a direction of pressing the battery cell.

According to another preferred aspect of the present disclosure, the battery module may include a busbar frame connected to the battery cell, and the support member may be supported by the busbar frame.

According to another preferred aspect of the present disclosure, the battery module may include a cable member interposed between the support member and the temperature sensor and electrically connected to the temperature sensor.

According to another preferred aspect of the present disclosure, the elastic force applying unit may include a first support plate supported by the support member; a second support plate supported by the module case to be spaced apart from the first support plate; and an elastic connection portion that has one end connected to the first support plate and the other end connected to the second support plate and supports the second support plate to elastically move the second support plate relative to the first support plate.

According to another preferred aspect of the present disclosure, the elastic connection portion may include a first connection portion having one end connected to the first support plate and the other end connected to the second support plate; and a second connection portion that is provided to be spaced apart from the first connection portion and has one end connected to the first support plate and the other end connected to the second support plate.

According to another preferred aspect of the present disclosure, the first connection portion and the second connection portion may be provided to face each other.

According to another preferred embodiment of the present disclosure, an apparatus for detecting temperature for a battery module including a battery cell and a module case provided to surround the perimeter of the battery cell may include a temperature sensor that is provided between the battery cell and the module case to be in contact with the battery cell and senses the temperature of the battery cell; and an elastic force applying unit that is provided between the module case and the temperature sensor and applies elastic force to the temperature sensor to move the temperature sensor in a direction of contacting the battery cell, wherein the elastic force applying unit may include a first support plate supported by the temperature sensor; a second support plate supported by the module case to be spaced apart from the first support plate; and an elastic connection portion that has one end connected to the first support plate and the other end connected to the second support plate and supports the second support plate to elastically move the second support plate relative to the first support plate.

According to another preferred embodiment of the present disclosure, the elastic connection portion may include a first connection portion having one end connected to the first support plate and the other end connected to the second support plate; and a second connection portion that is provided to be spaced apart from the first connection portion and has one end connected to the first support plate and the other end connected to the second support plate.

According to another preferred embodiment of the present disclosure, the first connection portion and the second connection portion may be provided to face each other.

### ADVANTAGEOUS EFFECTS

As described above, according to the embodiment of the present disclosure, it is possible to obtain the advantageous effect of improving stability and reliability.

In particular, according to the embodiment of the present disclosure, it is possible to accurately monitor temperature changes in the battery module without being affected by design errors, vibrations, and the like.

Above all, according to the embodiment of the present disclosure, it is possible to obtain the advantageous effect of suppressing the phenomenon in which a temperature sensor is spaced apart from a battery cell due to design errors, vibrations, and the like, and stably maintaining contact state between the temperature sensor and the battery cell.

Additionally, according to the embodiment of the present disclosure, it is possible to accurately measure and manage the temperature of the battery module.

### DESCRIPTION OF DRAWINGS

FIG. 1 is a view for describing a battery module according to an embodiment of the present disclosure.
FIG. 2 is a view for describing an apparatus for detecting temperature according to an embodiment of the present disclosure.
FIG. 3 is a view for describing a non-pressing state of an elastic force applying unit in an apparatus for detecting temperature according to an embodiment of the present disclosure.
FIG. 4 is a view for describing a pressing state of an elastic force applying unit in an apparatus for detecting temperature according to an embodiment of the present disclosure.
FIG. 5 is a view for describing a cable member in an apparatus for detecting temperature according to an embodiment of the present disclosure.
FIG. 6 is a view for describing an apparatus for detecting temperature according to another embodiment of the present disclosure.

### BEST MODE

Hereinafter, preferred embodiments of the present disclosure will be described in detail with reference to the accompanying drawings.

However, the technical idea of the present disclosure is not limited to some of the embodiments described, but may be implemented in various different forms, and within the scope of the technical idea of the present disclosure, one or more of the components may be selectively combined or substituted between the embodiments.

Additionally, the terms (including technical and scientific terms) used in the embodiments of the present disclosure may be construed as meanings generally understood by those having ordinary skill in the art to which the present disclosure pertains, unless explicitly specifically defined and described, and terms that are commonly used, such as terms defined in dictionaries, may be construed in consideration of the contextual meaning of the related technology.

Additionally, the terms used in the embodiments of the present disclosure are for the purpose of describing the embodiments and are not intended to limit the present disclosure.

In this specification, the singular form may include the plural form unless specifically stated in the phrase, and when described as "at least one (or more than one) of A, B, and C", it may include one or more of all combinations that can be combined with A, B, and C.

Additionally, in describing the components of the embodiments of the present disclosure, terms such as first, second, A, B, (a), (b), and the like may be used.

These terms are only intended to distinguish the components from other components, and do not limit the nature, order, or sequence of the corresponding components.

And, when a component is described as being 'connected', 'coupled', or 'contacted' to another component, this may include not only cases where the component is directly connected, coupled, or contacted to another component, but also cases where the component is 'connected', 'coupled', or 'contacted' to another component through a third component.

Additionally, when it is described as being formed or disposed "on top of (above) or on bottom of (below)" each component, the top (above) or bottom (below) may include not only cases where two components are in direct contact with each other, but also cases where one or more other components are formed or disposed between the two components. Additionally, when expressed as "on top of (above) or on bottom of (below)", this may include the meaning of not only the upward direction but also the downward direction based on one component.

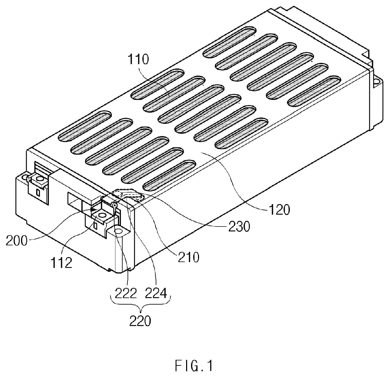

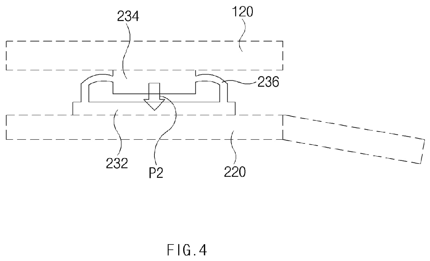

Referring to FIGS. 1 to 5, an apparatus for detecting temperature 200 according to an embodiment of the present disclosure includes a temperature sensor 210 that is provided between the battery cell 110 and the module case 120 to be in contact with the battery cell 110 and senses the temperature of the battery cell 110; a support member 220 that presses the temperature sensor 210 against the battery cell 110; and an elastic force applying unit 230 that applies elastic force to the support member 220 to move the support member 220 in a direction of pressing the temperature sensor 210 against the battery cell 110.

For reference, the apparatus for detecting temperature 200 according to an embodiment of the present disclosure may be used to measure the temperature of various battery modules 10 depending on required conditions and design specifications, and the present disclosure is not limited or restricted by the type and structure of the battery module 10 used in the apparatus for detecting temperature 200.

Hereinafter, a battery module 10 to which the apparatus for detecting temperature 200 according to an embodiment of the present disclosure is applied will be described as an example.

According to a preferred embodiment of the present disclosure, the battery module 10 includes a battery cell 110; a module case 120 provided to surround the perimeter of the battery cell 110; a temperature sensor 210 that is provided between the battery cell 110 and the module case 120 to be in contact with the battery cell 110 and senses the temperature of the battery cell 110; a support member 220 supported by the battery cell 110 and pressing the temperature sensor 210 against the battery cell 110 by its own weight; and an elastic force applying unit 230 that applies elastic force to the support member 220 to move the support member 220 in a direction of pressing the temperature sensor 210 against the battery cell 110.

The battery cell 110 may be provided in various structures depending on required conditions and design specifications, and the present disclosure is not limited or restricted by the structure or number of battery cells 110.

For example, the battery cell 110 may include an electrode assembly (not shown) and a case (exterior material) (not shown) that accommodates the electrode assembly therein.

According to a preferred embodiment of the present disclosure, the electrode assembly may include an electrode and a separator laminated on the electrode.

Hereinafter, an example in which the electrode assembly is configured by stacking a plurality of unit cells having a roughly flat plate shape will be described. According to another embodiment of the present disclosure, the electrode assembly may be configured to be wound in the form of a jelly roll.

For example, the electrode may include a first electrode stacked on one surface (e.g., top surface) of the separator, and a second electrode stacked on the other surface (e.g., bottom surface) of the separator.

Hereinafter, an example in which the first electrode is configured as a positive electrode and the second electrode is configured as a negative electrode will be described. According to another embodiment of the present disclosure, it is also possible to configure the first electrode as a negative electrode and the second electrode as a positive electrode.

The first electrode (positive electrode) and the second electrode (negative electrode) may be formed by applying a slurry obtained by mixing an electrode active material, a binder, and a plasticizer to a positive electrode current collector and a negative electrode current collector.

The positive electrode current collector is not particularly limited as long as it has conductivity without causing a chemical change in the battery. For example, stainless steel, aluminum, nickel, titanium, calcined carbon, or aluminum or stainless steel surface-treated with carbon, nickel, titanium, silver, or the like may be used as the positive electrode current collector.

The negative electrode current collector is not particularly limited as long as it has conductivity without causing a chemical change in the battery. For example, copper, stainless steel, aluminum, nickel, titanium, calcined carbon, or aluminum or stainless steel surface-treated with carbon, nickel, titanium, silver, or the like may be used as the negative electrode current collector. For example, a thin copper film (e.g., electrolytic copper foil or pressure copper foil) may be used as the negative electrode current collector.

The separator is designed to separate the negative electrode and the positive electrode and provide a passage for lithium ions to move, and may be used without any particular limitation as long as it is generally used as a separator in a lithium secondary battery.

For example, as a separator, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof may be used.

Alternatively, a conventional porous nonwoven fabric, for example, a nonwoven fabric made of high-melting-point glass fibers, polyethylene terephthalate fibers, or the like may be used as a separator, or a coated separator including a ceramic component or a polymer material may be used to ensure heat resistance or mechanical strength.

The case accommodates the electrode assembly therein and is provided to fully surround the perimeter of the electrode assembly.

The case may be provided in various structures capable of accommodating the electrode assembly therein, and the present disclosure is not limited or restricted by the structure and shape of the case.

For example, a can having a rectangular block shape may be used as the case. According to another embodiment of the present disclosure, the case may be configured to have a cylindrical shape (e.g., a cylindrical can) or other shapes.

The case may be formed of various materials according to required conditions and design specifications, and the present disclosure is not limited or restricted by the type and characteristics of the material of the case.

For example, the case may be configured to have a structure including a metal layer, such as an aluminum thin film or the like, in order to protect components such as an electrode assembly and an electrolyte injected into the case and to enhance supplementation and heat dissipation with respect to electrochemical properties by the electrode assembly and the electrolyte.

For reference, the electrolyte solution (electrolyte) used in the present disclosure may include various electrolytes that may define a passage for lithium ions to move in a lithium secondary battery, for example, an organic liquid electrolyte, an inorganic liquid electrolyte, a solid polymer electrolyte, a gel-type polymer electrolyte, a solid inorganic electrolyte, a molten inorganic electrolyte, and the like, and the present disclosure is not limited or restricted by the type and characteristics thereof. For example, the electrolyte may include an organic solvent and a lithium salt. Any organic solvent may be used without particular limitation as long as it may serve as a medium through which ions involved in the electrochemical reaction of the battery may move.

Referring to FIG. 1, a module case 120 is provided to modularize a plurality of battery cells 110.

The module case 120 may be provided in various structures capable of surrounding the perimeter of the plurality of battery cells 110, and the present disclosure is not limited or restricted by the type and structure of the module case 120.

For example, the module case 120 may be provided to have a roughly rectangular block shape, including a side case (not shown) provided to surround the side surface of the battery cell 110 and a cover case (not shown) provided to cover the upper part of the battery cell 110.

For example, the module case 120 may be formed by mutually welding a plurality of plates made of a metal material. According to another embodiment of the present disclosure, the module case may be configured to have a cylindrical shape or other shapes, and may be made of a material other than metal (e.g., synthetic resin).

According to a preferred embodiment of the present disclosure, the battery module 10 may include a busbar frame 112 connected to the battery cell 110.

The busbar frame 112 is provided to electrically connect a plurality of battery cells 110.

The busbar frame 112 may be provided in various structures capable of electrically connecting a plurality of stacked battery cells 110, and the present disclosure is not limited or restricted by the structure and shape of the busbar frame 112.

For example, the busbar frame 112 may be coupled (e.g., connected by welding) to both ends of the battery cell 110 along the length direction.

The temperature sensor 210 is provided between the battery cell 110 and the module case 120 to be in contact with the battery cell 110 to sense the temperature of the battery cell 110.

For example, the temperature sensor 210 may be provided between the cover case of the module case 120 and the upper end of the battery cell 110.

A conventional contact-type temperature sensor 210 may be used as the temperature sensor 210, and the present disclosure is not limited or restricted by the type and structure of the temperature sensor 210.

For example, a thermistor, which senses temperature based on changes in electrical resistance according to temperature, may be used as the temperature sensor 210. According to another embodiment of the present disclosure, a thermocouple or other sensors may be used as the temperature sensor.

Referring to FIGS. 1 and 2, the support member 220 is provided to press the temperature sensor 210 against the battery cell 110 by its own weight.

According to a preferred embodiment of the present disclosure, the support member 220 may be supported by the battery cell 110 via the busbar frame 112 connected to the battery cell 110.

In this way, by allowing the support member 220 to be supported by a busbar frame 112 provided to electrically connect each battery cell 110, the embodiment of the present disclosure may obtain the advantageous effect of simplifying the structure and improving design freedom and space utilization as it is not required to provide a separate structure for supporting the support member 220.

In the above-described and illustrated embodiment of the present disclosure, an example in which the support member 220 is supported by the battery cell 110 via the busbar frame 112 is described, but according to another embodiment of the present disclosure, the support member may be configured to be directly supported by the battery cell.

The support member 220 may be provided in various structures capable of pressing the temperature sensor 210 against the battery cell 110 by its own weight, and the present disclosure is not limited or restricted by the structure and shape of the support member 220.

According to a preferred embodiment of the present disclosure, the support member 220 may include a first support portion 222 supported by the battery cell 110; and a second support portion 224 that is rotatably connected to the first support portion 222 and presses the temperature sensor 210 against the battery cell 110 by its own weight, and the elastic force applying unit 230 may apply elastic force to the second support portion 224 to move the second support portion 224 in a direction of pressing the battery cell 110.

According to a preferred embodiment of the present disclosure, the first support portion 222 may be disposed along the vertical direction, and the second support portion 224 may be rotatably connected to the upper end of the first support portion 222. Hereinafter, an example in which the first support portion 222 and the second support portion 224 having a roughly straight shape are connected to each other to cooperatively form a roughly "L" shape will be described.

According to another embodiment of the present disclosure, the first support portion may be formed to be inclined with respect to the vertical direction, or the second support portion may be connected to a part other than the upper end of the first support portion (e.g., the central part of the first support portion). Alternatively, the first support portion and the second support portion may be formed in a curved shape or other shapes.

Referring to FIGS. 1 to 4, the elastic force applying unit 230 is provided to apply elastic force to the support member 220 to move the support member 220 in a direction of pressing the temperature sensor 210 against the battery cell 110.

The elastic force applying unit 230 may be provided in various structures capable of applying elastic force to the support member 220, and the present disclosure is not limited or restricted by the structure of the elastic force applying unit 230.

According to a preferred embodiment of the present disclosure, the elastic force applying unit 230 may include a first support plate 232 supported by the support member 220; a second support plate 234 supported by the module case 120 to be spaced apart from the first support plate 232; and an elastic connection portion 236 that has one end connected to the first support plate 232 and the other end connected to the second support plate 234 and supports the second support plate 234 to elastically move the second support plate 234 relative to the first support plate 232.

For example, the first plate may be formed in a roughly flat plate shape, and may be seated (closely contacted) on the upper surface (based on FIG. 2) of the support member 220.

The second plate may be formed in a roughly flat plate shape, and may be seated (closely contacted) on the inner surface of the module case 120.

The elastic connection portion 236 may be provided in various structures capable of supporting the second plate to elastically move the second plate relative to the first plate, and the present disclosure is not limited or restricted by the structure and shape of the elastic connection portion 236.

Here, when the second plate elastically moves relative to the first plate, it is defined to include both cases where only one of the first plate and the second plate moves relative to the other, and where both the first plate and the second plates move.

According to a preferred embodiment of the present disclosure, the elastic connection portion 236 may include a first connection portion 236a having one end connected to the first plate and the other end connected to the second plate; and a second connection portion 236b that is provided to be spaced apart from the first connection portion 236a and has one end connected to the first plate and the other end connected to the second plate.

The first connection portion 236a and the second connection portion 236b may be connected to various parts of the first plate and the second plate depending on the required conditions and design specifications, and the present disclosure is not limited or restricted by the parts (positions) at which the first connection portion 236a and the second connection portion 236b are connected.

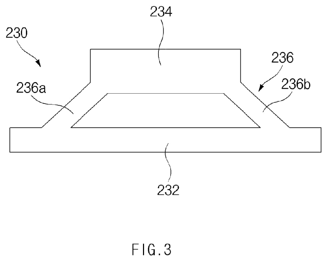

For example, one ends of the first connection portion 236a and the second connection portion 236b may be connected to the edge of the upper surface (based on FIG. 3) of the first plate, and the other ends of the first connection portion 236a and the second connection portion 236b may be connected to the side surface of the second plate.

The first connection portion 236a and the second connection portion 236b may be made of various elastically bendable materials, and the present disclosure is not limited or restricted by the materials and characteristics of the first connection portion 236a and the second connection portion 236b. For example, the first connection portion 236a and the second connection portion 236b may be made of a conventional elastic material, such as rubber, silicone, urethane, or the like.

When the elastic force applying unit 230 is interposed between the support member 220 and the module case 120, the elastic connection portion 236 (the first connection portion and the second connection portion) may be disposed in an elastically curved state, and an elastic force by the elastic connection portion 236 may be applied to the support member 220.

According to a preferred embodiment of the present disclosure, the first connection portion 236a and the second connection portion 236b may be provided to face each other.

In this way, by elastically supporting the second plate relative to the first plate via the first connection portion 236a and the second connection portion 236b that are provided to face each other, the embodiment of the present disclosure may elastically support the second plate relative to the first plate, not only against errors and vibrations along the upper-lower direction of the battery cell 110 (the upper-lower direction based on FIG. 2), but also against errors and vibrations along other directions inclined with respect to the upper-lower direction of the battery cell 110.

In the above-described and illustrated embodiment of the present disclosure, an example in which the elastic connection portion 236 includes the first connection portion 236a and the second connection portion 236b is described, but according to another embodiment of the present disclosure, the elastic connection portion may be configured to include only one connection portion or three or more connection portions.

Additionally, in the above-described and illustrated embodiment of the present disclosure, an example in which the elastic force applying unit 230 includes the first plate, the second plate, and the elastic connection portion 236 is described, but according to another embodiment of the present disclosure, it is also possible to configure the elastic force applying unit by using a conventional spring member such as a coil spring alone, or by combining the spring member with other members.

In this way, by allowing the support member 220 that presses the temperature sensor 210 against the battery cell 110 by its own weight to be elastically supported by the elastic force of the elastic force applying unit 230, the embodiment of the present disclosure may obtain the advantageous effect of minimizing the phenomenon in which the temperature sensor 210 is spaced apart from the battery cell 110 due to design errors, vibrations, and the like.

In particular, by applying both the pressing force P1 due to the weight of the support member 220 and the pressing force P2 due to the elastic force of the elastic force applying unit 230 to the temperature sensor 210 together, the embodiment of the present disclosure may obtain the advantageous effect of minimizing sensing failure phenomenon caused by the temperature sensor 210 being spaced apart from the battery cell 110 due to design errors, vibrations, and the like, and stably maintaining the contact state between the temperature sensor 210 and the battery cell 110.

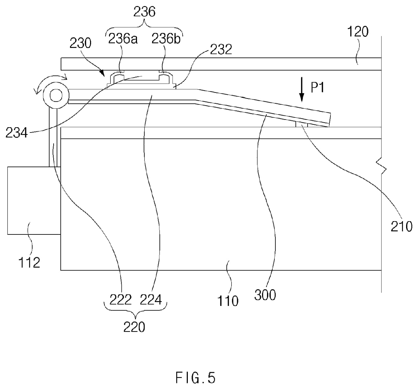

Referring to FIG. 5, according to a preferred embodiment of the present disclosure, the battery module 10 may include a cable member 300 interposed between the support member 220 and the temperature sensor 210 and electrically connected to the temperature sensor 210.

Various cables capable of transmitting (outputting) signals sensed by the temperature sensor 210 to the outside may be used as the cable member 300, and the present disclosure is not limited or restricted by the type and structure of the cable member 300.

For example, a flexible flat cable may be used as the cable member 300. According to another embodiment of the present disclosure, other cables having rigid characteristics may be used as the cable member.

In this way, by providing a cable member 300 between the support member 220 and the temperature sensor 210, and indirectly applying the pressing force to the temperature sensor 210 via the cable member 300 by the support member 220, the embodiment of the present disclosure may obtain the advantageous effect of minimizing deformation of and damage to the temperature sensor 210 due to direct contact (pressing) of the support member 220 with the temperature sensor 210 and extending the life of the temperature sensor 210.

Meanwhile, in the above-described and illustrated embodiment of the present disclosure, an example in which the elastic force of the elastic force applying unit 230 is applied to the temperature sensor 210 via the support member 220 is described, but according to another embodiment of the present disclosure, it is also possible to configure the elastic force of the elastic force applying unit 230' to be applied directly to the temperature sensor 210.

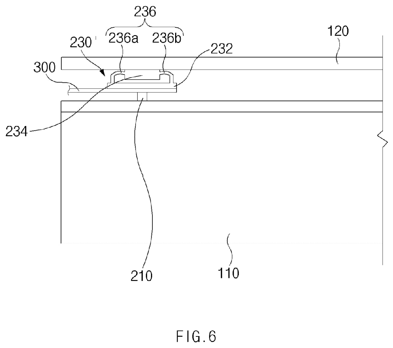

FIG. 6 is a view for describing an apparatus for detecting temperature according to another embodiment of the present disclosure. In addition, the same or equivalent reference numerals are assigned to the same or equivalent parts as those of the above-described configuration, and a detailed description thereof will be omitted.

Referring to FIG. 6, according to another preferred embodiment of the present disclosure, an apparatus for detecting temperature 200 for a battery module 10 including a battery cell 110 and a module case 120 provided to surround the perimeter of the battery cell 110 may include a temperature sensor 210 that is provided between the battery cell 110 and the module case 120 to be in contact with the battery cell 110 and senses the temperature of the battery cell 110; and an elastic force applying unit 230' that is provided between the module case 120 and the temperature sensor 210 and applies elastic force to the temperature sensor 210 to move the temperature sensor 210 in a direction of contacting the battery cell, wherein the elastic force applying unit 230' may include a first plate supported by the temperature sensor 210; a second plate supported by the module case 120 to be spaced apart from the first plate; and an elastic connection portion 236 that has one end connected to the first plate and the other end connected to the second plate and supports the second plate to elastically move the second plate relative to the first plate.

The elastic connection portion 236 may be provided in various structures capable of elastically supporting the second plate relative to the first plate, and the present disclosure is not limited or restricted by the structure and shape of the elastic connection portion 236.

According to another preferred embodiment of the present disclosure, the elastic connection portion 236 may include a first connection portion 236a having one end connected to the first plate and the other end connected to the second plate; and a second connection portion 236b that is provided to be spaced apart from the first connection portion 236a and has one end connected to the first plate and the other end connected to the second plate.

The first connection portion 236a and the second connection portion 236b may be connected to various parts of the first plate and the second plate depending on the required conditions and design specifications, and the present disclosure is not limited or restricted by the parts (positions) at which the first connection portion 236a and the second connection portion 236b are connected.

For example, one ends of the first connection portion 236a and the second connection portion 236b may be connected to the edge of the upper surface (based on FIG. 6) of the first plate, and the other ends of the first connection portion 236a and the second connection portion 236b may be connected to the side surface of the second plate.

The first connection portion 236a and the second connection portion 236b may be made of various elastically bendable materials, and the present disclosure is not limited or restricted by the materials and characteristics of the first connection portion 236a and the second connection portion 236b. For example, the first connection portion 236a and the second connection portion 236b may be made of a conventional elastic material, such as rubber, silicone, urethane, or the like.

When the elastic force applying unit 230' is interposed between the support member 220 and the module case 120, the elastic connection portion 236 (the first connection portion and the second connection portion) may be disposed in an elastically curved state (compressed state), and an elastic force by the elastic connection portion 236 may be applied to the support member 220.

According to another preferred embodiment of the present disclosure, the first connection portion 236a and the second connection portion 236b may be provided to face each other.

In this way, by elastically supporting the second plate relative to the first plate via the first connection portion 236a and the second connection portion 236b that are provided to face each other, the embodiment of the present disclosure may elastically support the second plate relative to the first plate, not only against errors and vibrations along the upper-lower direction of the battery cell 110 (the upper-lower direction based on FIG. 2), but also against errors and vibrations along other directions inclined with respect to the upper-lower direction of the battery cell 110.

According to another preferred embodiment of the present disclosure, a cable member 300 electrically connected to the temperature sensor 210 may be interposed between the elastic force applying unit 230' and the temperature sensor 210.

Various cables capable of transmitting (outputting) signals sensed by the temperature sensor 210 to the outside may be used as the cable member 300, and the present disclosure is not limited or restricted by the type and structure of the cable member 300.

For example, a flexible flat cable may be used as the cable member 300.

In this way, by providing a cable member 300 between the elastic force applying unit 230' and the temperature sensor 210, and indirectly applying the pressing force (elastic force) to the temperature sensor 210 via the cable member 300 by the elastic force applying unit 230', the embodiment of the present disclosure may obtain the advantageous effect of minimizing deformation of and damage to the temperature sensor 210 due to direct contact (pressing) of the elastic force applying unit 230' with the temperature sensor 210 and extending the life of the temperature sensor 210.

Although the present disclosure has been described centered on the embodiment hereinabove, this is merely an example and does not limit the present disclosure, and those having ordinary skill in the art will understand that various modifications and applications not exemplified above are possible without departing from the essential characteristics of the present embodiment. For example, each component specifically shown in the embodiment may be modified and implemented. And, the differences related to such modifications and applications should be construed as being included in the scope of the present disclosure defined in the appended claims.

### [List of Reference Numerals]

10: Battery module
110: Battery cell
112: Busbar frame
120: Module case
200: Apparatus for detecting temperature
210: Temperature sensor
220: Support member
222: First support portion
224: Second support portion
230, 230': Elastic force applying unit
232: First support plate
234: Second support plate
236: Elastic connection portion
236a: First connection portion
236b: Second connection portion
300: Cable member

## Claims

1. An apparatus for detecting temperature for a battery module comprising a battery cell and a module case provided to surround the perimeter of the battery cell, the apparatus for detecting temperature comprising:
a temperature sensor that is provided between the battery cell and the module case to be in contact with the battery cell and senses the temperature of the battery cell;
a support member that presses the temperature sensor against the battery cell; and
an elastic force applying unit that applies elastic force to the support member to move the support member in a direction of pressing the temperature sensor against the battery cell.

2. The apparatus for detecting temperature according to claim 1,
wherein the support member comprises:
a first support portion supported by the battery cell; and
a second support portion that is rotatably connected to the first support portion and presses the temperature sensor against the battery cell by its own weight, and
wherein the elastic force applying unit applies elastic force to the second support portion to move the second support portion in a direction of pressing the battery cell.

3. The apparatus for detecting temperature according to claim 2,
wherein the first support portion is disposed along the vertical direction, and
wherein the second support portion is rotatably connected to the upper end of the first support portion.

4. The apparatus for detecting temperature according to claim 1,
wherein the battery module comprises a busbar frame connected to the battery cell, and
wherein the support member is supported by the busbar frame.

5. The apparatus for detecting temperature according to claim 1,
wherein the battery module comprises a cable member that is interposed between the support member and the temperature sensor and is electrically connected to the temperature sensor.

6. The apparatus for detecting temperature according to claim 1,
wherein the elastic force applying unit comprises:
a first support plate supported by the support member;
a second support plate supported by the module case to be spaced apart from the first support plate; and
an elastic connection portion that has one end connected to the first support plate and the other end connected to the second support plate and supports the second support plate to elastically move the second support plate relative to the first support plate.

7. The apparatus for detecting temperature according to claim 6,
wherein the elastic connection portion comprises:
a first connection portion having one end connected to the first support plate and the other end connected to the second support plate; and
a second connection portion that is provided to be spaced apart from the first connection portion and has one end connected to the first support plate and the other end connected to the second support plate.

8. The apparatus for detecting temperature according to claim 7,
wherein the first connection portion and the second connection portion are provided to face each other.

9. A battery module comprising:
a battery cell;
a module case provided to surround the perimeter of the battery cell;
a temperature sensor that is provided between the battery cell and the module case to be in contact with the battery cell and senses the temperature of the battery cell;
a support member that presses the temperature sensor against the battery cell; and
an elastic force applying unit that applies elastic force to the support member to move the support member in a direction of pressing the temperature sensor against the battery cell.

10. The battery module according to claim 9,
wherein the support member comprises:
a first support portion supported by the battery cell; and
a second support portion that is rotatably connected to the first support portion and presses the temperature sensor against the battery cell by its own weight, and
wherein the elastic force applying unit applies elastic force to the second support portion to move the second support portion in a direction of pressing the battery cell.

11. The battery module according to claim 9, comprising:
a busbar frame connected to the battery cell,
wherein the support member is supported by the busbar frame.

12. The battery module according to claim 9, comprising:
a cable member that is interposed between the support member and the temperature sensor and is electrically connected to the temperature sensor.

13. The battery module according to claim 9,
wherein the elastic force applying unit comprises:
a first support plate supported by the support member;
a second support plate supported by the module case to be spaced apart from the first support plate; and
an elastic connection portion that has one end connected to the first support plate and the other end connected to the second support plate and supports the second support plate to elastically move the second support plate relative to the first support plate.

14. The battery module according to claim 13,
wherein the elastic connection portion comprises:
a first connection portion having one end connected to the first support plate and the other end connected to the second support plate; and
a second connection portion that is provided to be spaced apart from the first connection portion and has one end connected to the first support plate and the other end connected to the second support plate.

15. The battery module according to claim 14,
wherein the first connection portion and the second connection portion are provided to face each other.

16. An apparatus for detecting temperature for a battery module comprising a battery cell and a module case provided to surround the perimeter of the battery cell, the apparatus for detecting temperature comprising:
a temperature sensor that is provided between the battery cell and the module case to be in contact with the battery cell and senses the temperature of the battery cell; and
an elastic force applying unit that is provided between the module case and the temperature sensor and applies elastic force to the temperature sensor to move the temperature sensor in a direction of contacting the battery cell,
wherein the elastic force applying unit comprises:
a first support plate supported by the temperature sensor;
a second support plate supported by the module case to be spaced apart from the first support plate; and
an elastic connection portion that has one end connected to the first support plate and the other end connected to the second support plate and supports the second support plate to elastically move the second support plate relative to the first support plate.

17. The apparatus for detecting temperature according to claim 16,
wherein the elastic connection portion comprises:
a first connection portion having one end connected to the first support plate and the other end connected to the second support plate; and
a second connection portion that is provided to be spaced apart from the first connection portion and has one end connected to the first support plate and the other end connected to the second support plate.

18. The apparatus for detecting temperature according to claim 17,
wherein the first connection portion and the second connection portion are provided to face each other.
